# EUROPEAN PATENT SPECIFICATION

(11) **EP 2 482 568 B1**
(45) Date of publication and mention of the grant of the patent: **09.10.2019**
(21) Application number: 11152496.3
(22) Date of filing: 28.01.2011
(51) Int. Cl.: H04W 4/029, H04L 29/08

(54) **Method and network element for heuristic location tracking**
Verfahren und Netzwerkelement zur heuristischen Standortverfolgung
Procédé et élément de réseau pour le suivi heuristique d'emplacement

(43) Date of publication of application: 01.08.2012
(73) Proprietor: BlackBerry Limited, Waterloo, ON N2K 0A7 (CA)
(72) Inventor: Li, Andrey, Kanata Ontario K2K 2A5 (CA)
(74) Representative: Hanna Moore + Curley

(56) References cited:
- US-A1- 2004 156 326
- US-A1- 2004 198 386
- US-A1- 2005 085 257
- US-A1- 2007 026 871
- US-A1- 2010 203 901
- US-A1- 2010 255 856
- US-B1- 6 243 039

## Description

### FIELD OF THE DISCLOSURE

The present disclosure relates to location tracking on a mobile device and in particular to location tracking based on heuristics.

### BACKGROUND

Many mobile devices are now equipped with the ability to determine their location and to report the location to others. While this provides many advantages, it also raises privacy issues, as some applications allow observers to track the location of users anywhere, and anytime.

Specifically, it is useful and desirable to allow observers to track the location of mobile device users in some circumstances. In other circumstances, this ability infringes upon the users' right to privacy.

US 2004/156326 describes the use of triggers and a location hypercube to enable push-based location applications. The method estimates the future/updated location of a target locatable based on a previous location of the target locatable, a timestamp of the previous location, and a velocity estimated from successive locations. The estimate may also take into account a street network, anticipated route, and/or traffic conditions, and may be based on the history and profile of the target locatable such as prior routes taken, prior locations visited, etc. US6243039 describes a system that tracks the current and historical locations of a GPS locator device carried by a person, so that a parent can easily and frequently monitor the location of a child. It provides a means for a parent to trigger the automatic transmission of the device's location, via a Web site or call placed to a call center agent or a VRU, and a process of auto-notification of a device's movement that exceeds a pre-specified threshold. US 2007/026871 describes a wireless network with adaptive autonomous location push and a method of providing location-based services that includes transmitting a first location criterion from a wireless network server to a wireless device, and evaluating whether a physical location of the wireless device satisfies the first location criterion. When the first location criteria is satisfied, an indication is transmitted from the wireless device to a server that the first location criterion has been satisfied. US 2010/0203901 describes location-based services using geofences generated from learned patterns of movement. Information indicative of location of a mobile device is periodically collected. The collected location information is processed in a server to determine at least one normal pattern of movement of the mobile device from a first location to a second location. An alert is generated if subsequent movement of the mobile device from the first location to the second location exhibits a significant deviation from the normal pattern of movement.

### SUMMARY

The invention is defined by independent claims 1 and 12. In the following, parts of the description and drawings referring to embodiments which are not covered by the claims are not presented as embodiments of the invention, but as examples useful for understanding the invention.

According to one aspect of the present disclosure, there is provided a method comprising: building a location profile for a target mobile device by collecting location information at the same time intervals within each of a plurality of time cycles, wherein building the location profile comprises comparing the collected location information for each of the time intervals with the collected location information for others of the same time intervals within the plurality of time cycles and wherein the location profile is created during a learning phase and includes an expected location and an error range for each time interval of the collected location information; maintaining, in a storage module, the location profile of the target mobile device; receiving the current location of the target mobile device; verifying whether the current location deviates from the location profile; and if the current location deviates from the location profile, triggering a notification to an observer device, the notification including a distance value from the location profile.

According to another aspect of the present disclosure, there is provided a network element comprising: a communication subsystem; a processor configured to: build a location profile for a target mobile device by collecting location information at time intervals in a plurality of time cycles, wherein building the location profile comprises comparing location information collected at a time interval within a first time cycle of the plurality of time cycles with other location information, wherein the other location information is taken at the same time interval but within the remaining time cycles of the plurality of time cycles, and wherein the location profile is created during a learning phase and includes an expected location and an error range for each time interval of the collected location information; receive the current location of the target mobile device; verify whether the current location deviates from the location profile; and if the current location deviates from the location profile, trigger a notification to an observer device, the notification including a distance value from the location profile, wherein the network element comprises a storage module configured to maintain the location profile of the target mobile device.

### BRIEF DESCRIPTION OF THE DRAWINGS

The present disclosure will be better understood with reference to the drawings in which:
**Figure 1** is a block diagram showing an exemplary architecture for the method and system of the present disclosure;
**Figure 2** is a block diagram of an exemplary learning method;
**Figure 3** is a block diagram illustrating the computation of the location profile according to one embodiment.
**Figure 4** is a block diagram of a method according to one embodiment; and
**Figure 5** is a block diagram of an exemplary user equipment capable of being used with the present method and system.

### DETAILED DESCRIPTION

The present disclosure is described below with regards to various embodiments. In particular, the present disclosure could be applied to any location determination technology, such as Global Positioning System (GPS), Assisted GPS, and others.

The present disclosure relates to the tracking of at least one device by an observer while still considering privacy issues. This is done by using the tracking device to collect data. The data is then analyzed and compared to heuristic information to determine whether a notification should be triggered. The notification can be sent to an observer. The trigger is based on rules based on positional or other data, as provided below.

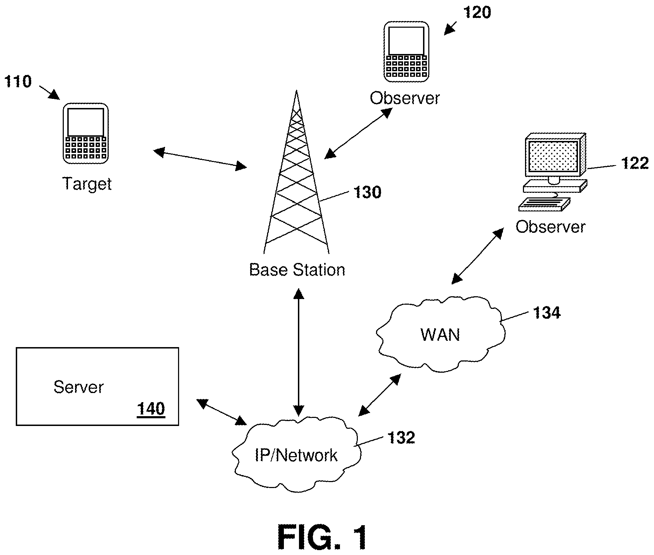

Reference is now made to **Figure 1**, which shows an exemplary architecture for one embodiment of a system in accordance with the present disclosure.

In **Figure 1****,** a target device **110** communicates with a mobile network **130.** In one embodiment, target device **110** is a mobile device and network **130** is a wireless network. Such a network can include, but is not limited to a Code Division Multiple Access (CDMA) network, a Global System for Mobile communications (GSM), Universal Mobile Terrestrial System (UMTS), Long Term Evolution (LTE), Long Term Evolution Advanced (LTE-A), among others. In other embodiments network **130** can include an access point and be a WiFi™ or WiMAX™ system. Other networks 130 will be known to those skilled in the art.

Network **130** can communicate with a further IP network **132** such as the Internet, which may communicate, in some cases, with a wide area network (WAN) **134.**

An observer **120** or **122** can also communicate with network **130** through wired or wireless communication channels. For example, observer **120** may be a mobile device or observer 122 may be a fixed computer.

A server **140** may further communicate with observer **120** or **122** through network **130,** typically through IP network **132.** Server **140** may be used in some embodiments where privacy requires that raw information not be sent to an observer **120** or **122.**

Target device **110** may be any mobile device. Mobile devices are known to those in the art and can also be referred to as a mobile terminal, mobile station, personal digital assistant, smart phone, laptop, among others.

In the first portion of the present method, which will hereinafter be referred to as the "learning phase", a tracked mobile device collects location information at intervals in order to build a location history, or a location profile for the mobile device.

For example, according to a non-limiting embodiment of the present method, a mobile device builds its location history or profile (hereinafter, the terms 'history' and 'profile' are used interchangeably) based on a 24 hour cycle and 1 hour intervals. In this embodiment, the mobile device collects its location data once every hour and analyzes readings made at the same time of day together.

Specifically, if a location reading is taken at 9 AM on a first day, subsequent readings will occur at 10 AM, 11 AM, noon, 1 PM, and so on. For analysis purposes, the location reading taken at 9 AM on the following day will be compared with the location reading taken at 9 am on the first day. As would be appreciated by those skilled in the art, the above is merely an example, and other cycles than 24 hours or other intervals than one hour are also possible.

The length of the learning phase can vary between embodiments. In a typical embodiment, the learning phase would last for 10 to 20 cycles. In other embodiments, the learning phase is ongoing and the location profile is continuously refined. In yet another embodiment, the learning phase may continue until certain conditions are met. For example, in some embodiments, the learning phase may continue until the standard deviation calculated for each time interval within a cycle is less than a threshold.

The results of the location readings are then stored and analyzed in order to create the user's location profile. In one embodiment, the readings are stored and analyzed on the mobile device. In other embodiments, the readings are transferred to the observer device for storage and analysis. In yet another embodiment, the readings are transferred to an application server on the network.

In some embodiments, the readings are transferred to the observer device or an application server using a secure data protocol.

In embodiments where the readings are transferred to the observer device for storage and analysis, the readings should remain invisible to the user of the observer device, as they represent the raw location data of the tracked mobile device.

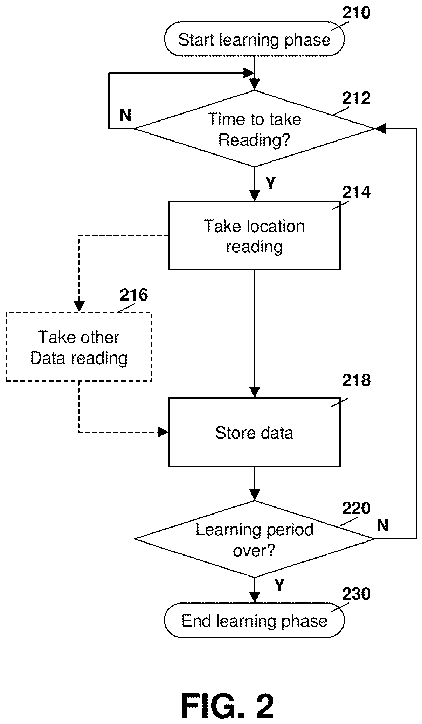

The above is shown, for example, with reference to **Figure 2****.** The process of **Figure 2** starts at block **210** and proceeds to block **212** in which a check is made to determine whether it is time to take a reading. If not the process continues to loop to block **212** until it is time to take a reading. As will be appreciated by those in the art having regard to the present disclosure, the check of block **212** can be implemented in a variety of ways including a timer, an interrupt, among other options.

From block **212,** the process proceeds to block **214** in which a location reading is taken. The location reading of block **214** can utilize an internal Global Positioning System (GPS) within the device, assisted GPS using a base station, an external GPS communicating with the device through short range communications, among other options.

From block **214** the process may optionally proceed to block **216** to collect other heuristic data. For example in block **216** data from an accelerometer may be recorded, data from a temperature sensor may be recorded or other data from external or internal sensors may be utilized. The present disclosure is not limited by any such sensor or data.

From block **216,** or from block **214** if block **216** is not used, the process proceeds to block **218** in which the data is stored. The data may be stored on the device being tracked or may be reported directly to an observer to store the data on the observer's device.

From block **218** the process proceeds to block **220** to check whether the learning period or stage is over. If no the process proceeds to block **212** to determine the next time to take a reading.

If it is determined in block **220** that the learning period is over the process proceeds to block **230** and ends the learning process.

As new readings are taken and stored, the device on which they are stored (the tracked device, observer device, or an application server) performs an analysis to create a location profile for the mobile device.

The purpose of the location profile is to enable the detection of significant deviations from a user's usual traveling habits in order to alert the observer of such a deviation. Accordingly, the location profile can be computed in a number of ways, as long as this objective is achieved.

In one embodiment, described in greater detail below, the location profile is based on a normal distribution of locations for each reading time. Other methods of computing a location profile are also within the scope of the present disclosure.

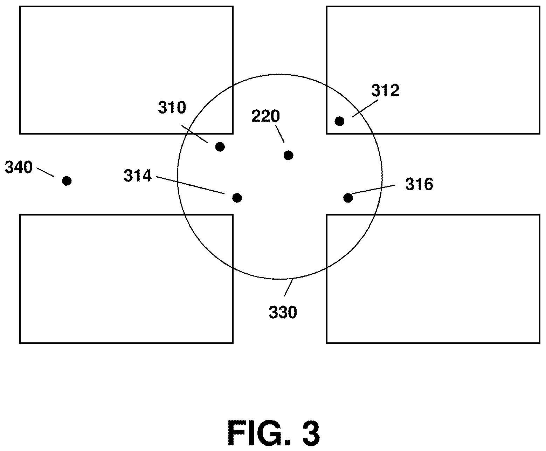

In this embodiment, an average position for each interval within the cycle is calculated, as is the standard deviation for the position, using standard statistical techniques. An example is provided in **Figure 3****.**

In **Figure 3****,** location readings **310, 312, 316** and **318** were all made during the learning phase. The average location reading is shown at **320.** A circle **330,** centered around average location **320,** has a radius which is computed as a function of the standard deviation. For example, in one embodiment, the radius of circle **330** is equal to 3 times the standard deviation.

At a time after the learning phase, a location reading **340** is made. As reading **340** is outside of circle **330,** it is deemed to be unusual and the observer is notified. In one embodiment, the observer is simply notified that the tracked user has deviated from his location profile without providing further details. In another embodiment, the observer is notified of the extent by which the tracked user has deviated, and in yet another embodiment, the notification could include the exact location of the tracked user when the reading took place.

In some embodiments, the learning phase might be constrained by rules which would ensure greater data integrity. For example, on some occasions, the user might travel far from its usual destinations, and readings taken on such occasions would contaminate the data.

Accordingly, in one embodiment, the user may be allowed to turn off the learning mode temporarily. In another embodiment, readings which are too far (according to, for example, a threshold value) from an existing average value are simply discarded for the purposes of the learning phase.

Based on the above, a tracked user's behavior is learned.

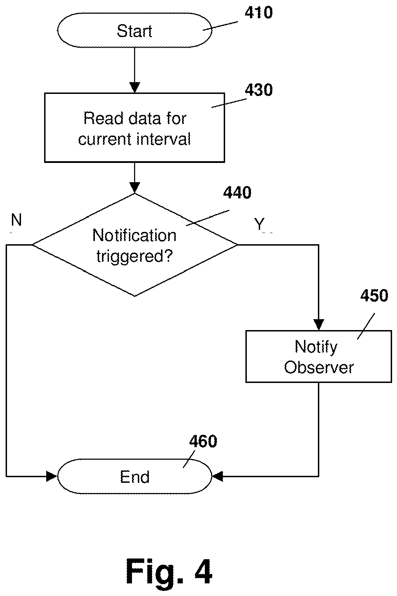

Reference is now made to **Figure 4****,** which shows a block diagram of a method according to the above embodiment. The learning phase of **Figure 2** has been completed prior to the process of **Figure 4** being used.

The process starts at block 410 and proceeds to block **430** in which the tracked mobile device reads its current location. In some embodiments, this may occur at fixed times which may or may not correspond to the intervals of the cycle during the learning phase. In other embodiments, the mobile device may read its current location almost continuously. In yet further embodiments, the reading may be based on polling by the observer.

From block 430 the process proceeds to block 440, in which a check is made to determine whether the current location is within the expected range. As per the above , the check may be computed at the target device, an application server, or the the observer device. In that case, the current location is sent to the observer device or the application server prior to determining whether the current location is within the expected range.

As discussed above, the expected range is typically the average location for a given time, plus a function of the standard deviation as computed during the learning phase.

Further, the reading of block **430** and calculation of block **440** can include other data from the target device, such as accelerometer readings, temperature readings, available network readings, battery level, or other data known to the target device.

If the location is within the expected range, or if other rules to trigger a notification are not met, the method ends at block **460** until a new measurement is made. Once the new measurement is made, the process starts again from block **430.**

If the check of block **440** causes a notification trigger, the process proceeds to block **350,** where the observer is notified. From block **450** the process then proceeds to block **360** and ends until another measurement is made.

The above method could be further refined by allowing either the observer or the user to set rules for determining when to notify the observer.

For example, a rule could be set by the observer, so that the observer is notified of only the second deviation by the user in a given day. Another rule could specify a threshold distance from the average location, beyond which the observer would be notified. As would be appreciated by those skilled in the art, such a rule could be set to override the error range computed as a function of the standard deviation in some embodiments.

Yet another kind of rule could allow the observer or the user to define a large area, in which the user is expected to be at given times. For example, if the user is a student at a university, the area corresponding to the university campus could be entered into the system, via the user's mobile device or the observer's mobile device, and the observer would be notified when the user is a certain distance away from the campus at a relevant time.

In some cases, it may be desirable to notify the observer that the tracked mobile device is in a particular location, irrespective of the user's location history. For example, a parent may want to be notified if his or her child is venturing into a dangerous area of a city. In this scenario, the parent could configure the notification application to notify the observer anytime the tracked user enters an area designated as dangerous, or simply prohibited, by the parent.

The above rules are only provided as examples, and any number of rules could be implemented as would be appreciated by those skilled in the art.

The above rules can be implemented in block **440** of **Figure 4** to check whether a rule has been satisfied by the latest reading. As would be appreciated by those skilled in the art, all data pertaining to these rules will need to be transferred from the device on which the rules were entered to the device on which the analysis portion of the method is performed.

In other embodiments, the present method and apparatus can also learn a profile, and detect deviation from the profile, based on more parameters than just location.

Many mobile devices today are equipped with a whole array of sensors, including but not limited to, accelerometers, sensors for measuring temperature, luminosity, and atmospheric pressure. These sensors can collect data similarly to the location detection means for use in the present method.

For example, temperature data could be collected and correlated with other data such as time, and data from other sensors. The collected data would then be analyzed for pattern recognition, allowing the system to detect future deviations from established patterns.

In one embodiment, temperature data is collected continuously from a temperature sensor on a mobile device. As this data is of significant size, in most cases it will be preferable to store the data locally, however, it may also be advantageous to transfer the data to a server or an observer device for storage.

The stored temperature data is then analyzed for pattern recognition. In one example, the data may reveal a pattern which suggests that for 15 to 20 minutes everyday, around 10:30am, the temperature drops significantly from the temperature observed throughout the day. This could be caused by the user of the mobile device going out during recess at school.

If, at one point after the pattern has been learned by the system, the user of the mobile device fails to go out during recess, or if the user remains outside for significantly longer than usual, the system will detect this deviation from established patterns, and notify an observer.

As would be appreciated by those skilled in the art, the above example is merely illustrative and any type of sensor could be used to collect data. Furthermore, any number of sensor can be used to generate data, and data from various sensors may be correlated against each other in order to extract meaningful patterns.

In these cases, as in the location and temperature cases discussed above, the data from the sensors is stored and analyzed for pattern recognition. When an event deviates significantly from the established patterns, the observer device is notified as described above.

In other embodiments, an observer device may be notified according to rules set by the observer, as described above with respect to location. Under this scenario, the user of the observer device (also referred to herein as the "observer"), sets conditions based on the various sensor data collected by the observed device. As will be appreciated by those skilled in the art, these conditions may or may not relate to patterns detected during the learning phase. When these conditions are met, the observer device is notified.

The notification may also vary depending on severity. For example, a child leaving a school by foot, as determined by an accelerometer, may trigger a low severity notification to a parent. The notification may simply be that the child has left the school premises at a certain time. Conversely, a child leaving a school by vehicle may cause more concern to a parent, and more information such as the road that the child is on or even the exact location of the child may be provided in this case.

Thus the trigger of block **440** could have various severity levels and the notification of block **450** may provide different information levels based on the severity of the trigger.

Based on the above, a target device **110** may include software or program code to determine a location and other data that may be relevant to an observer. In one embodiment target device may also include software for notifying an observer. In this case, raw data may never be sent across a network and instead the notification software may make a determination of whether an alert or notification should be sent.

In other embodiments, the target **110** may sent the information to notification software located either on server **140** or on an observer device **120** or **122.** If the information is sent to an observer device **120** or **122,** software within the device may prevent the disclosure of the raw information to the user of the observer device **120** or **122.**

If the raw data is sent to server **140,** server **140** can make the determination, utilizing software on the server **140,** of whether to send a notification to observer **120** or **122.**

In each case, device **110, 120, 122** or **130** include a processor and memory to execute program code to analyze the data and determine whether a notification should be triggered.

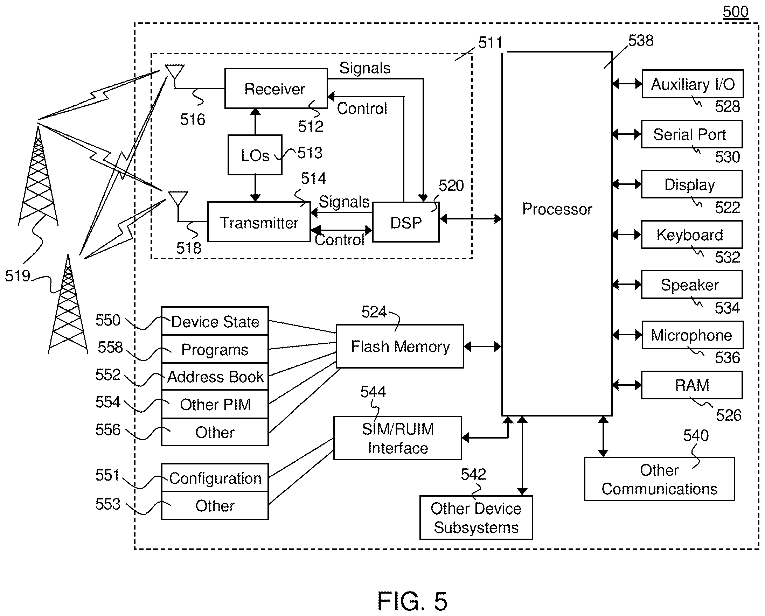

Target device **110** or observer device **120** can be any mobile device. One such exemplary mobile device is illustrated below with reference to **Figure 5****.** The mobile device of **Figure 5** is however not meant to be limiting and other mobile devices could also be used.

Mobile device **500** is typically a two-way wireless communication device having voice and data communication capabilities. Mobile device **500** generally has the capability to communicate with other devices or computer systems. Depending on the exact functionality provided, the mobile device may be referred to as a data messaging device, a two-way pager, a wireless e-mail device, a cellular telephone with data messaging capabilities, a wireless Internet appliance, a wireless device, a user equipment, or a data communication device, as examples.

Where mobile device **500** is enabled for two-way communication, it will incorporate a communication subsystem **511,** including both a receiver **512** and a transmitter **514,** as well as associated components such as one or more antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some networks, network access is associated with a subscriber or user of mobile device **500.** A mobile device may require a removable user identity module (RUIM) or a subscriber identity module (SIM) card in order to operate on the network. The SIM/RUIM interface **544** may be similar to a card-slot into which a SIM/RUIM card can be inserted and ejected like a diskette or PCMCIA card. The SIM/RUIM card can have memory and hold many key configuration **551,** and other information **553** such as identification, and subscriber related information.

When required network registration or activation procedures have been completed, mobile device **500** may send and receive communication signals over the network **519.** As illustrated in **Figure 5****,** network **519** can consist of multiple base stations communicating with the mobile device. For example, in a hybrid CDMA 1x EVDO system, a CDMA base station and an EVDO base station communicate with the mobile station and the mobile device is connected to both simultaneously. In other systems such as Long Term Evolution (LTE) or Long Term Evolution Advanced (LTE-A), multiple base stations may be connected to for increased data throughput. Other systems such as GSM, GPRS, UMTS, HSDPA, among others are possible and the present disclosure is not limited to any particular cellular technology.

Signals received by antenna **516** through communication network **519** are input to receiver **512,** which may perform such common receiver functions as signal amplification, frequency down conversion, filtering, channel selection and the like, and in the example system shown in **Figure 5****,** analog to digital (A/D) conversion. A/D conversion of a received signal allows more complex communication functions such as demodulation and decoding to be performed in the DSP **520.** In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** generally includes a processor **538** which controls the overall operation of the device. Communication functions, including data and voice communications, are performed through communication subsystem **511.** Processor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art having the benefit of the present disclosure.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list, among other applications.

Operating system software used by the processor **538** may be stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. The applications may be segregated based on the mode or category they fall into. Memory **524** may further provide security for corporate data and if some applications are locked while others are not.

Processor **538,** in addition to its operating system functions, may enable execution of software applications on the mobile device. A predetermined set of applications that control basic operations, including at least data and voice communication applications for example, will normally be installed on mobile device **500** during manufacturing. Other applications could be installed subsequently or dynamically.

Applications and software, such as those for implements the process of **Figure 2****,** **3** and **4****,** may be stored on any computer readable storage medium. The computer readable storage medium may be a tangible or intransitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application may have the ability to send and receive data items, via the wireless network **519.** In one embodiment, the PIM data items are seamlessly integrated, synchronized and updated, via the wireless network **519,** with the mobile device user's corresponding data items stored or associated with a host computer system. Further applications may also be loaded onto the mobile device **500** through the network **519,** an auxiliary I/O subsystem **528,** serial port **530,** short-range communications subsystem **540** or any other suitable subsystem **542,** and installed by a user in the RAM **526** or a non-volatile store (not shown) for execution by the processor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the processor **538,** which may further process the received signal for output to the display **522,** or alternatively to an auxiliary I/O device **528.**

A user of mobile device **500** may also compose data items such as email messages for example, using the keyboard **532,** which may be a complete alphanumeric keyboard or telephone-type keypad, among others, in conjunction with the display **522** and possibly an auxiliary I/O device **528.** Such composed items may then be transmitted over a communication network through the communication subsystem **511.**

For voice communications, overall operation of mobile device **500** is similar, except that received signals would typically be output to a speaker **534** and signals for transmission would be generated by a microphone **536.** Alternative voice or audio I/O subsystems, such as a voice message recording subsystem, may also be implemented on mobile device **500.** Although voice or audio signal output is preferably accomplished primarily through the speaker **534,** display **522** may also be used to provide an indication of the identity of a calling party, the duration of a voice call, or other voice call related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem.

Other communications subsystems **540,** such as a short-range communications subsystem, is a further optional component which may provide for communication between mobile device **500** and different systems or devices, which need not necessarily be similar devices. For example, the subsystem **540** may include an infrared device and associated circuits and components or a Bluetooth™ communication module to provide for communication with similarly enabled systems and devices.

The embodiments described herein are examples of structures, systems or methods having elements corresponding to elements of the techniques of this application.

## Claims

1. A method comprising:
building a location profile, for a target mobile device, by collecting location information (214) at the same time interval (212) within each of a plurality of time cycles (220, 230), wherein building the location profile comprises comparing the collected location information for each of the time intervals with the collected location information for others of the time intervals within the plurality of time cycles (220, 230) and wherein the location profile is created during a learning phase (210, 230) and includes an expected location and an error range for each time interval of the collected location information;
maintaining, in a storage module, the location profile of the target mobile device;
receiving the current location of the target mobile device (430);
verifying whether the current location deviates from the location profile (440); and
if the current location deviates from the location profile (440), triggering a notification to an observer device (450), the notification including a distance value from the location profile.

2. The method of claim 1, further comprising the step of:
looking up the expected location and the error range for the current time interval of the time cycle; and
determining whether the current location is within an area defined by the expected location and the expected error range.

3. The method of claim 2, wherein the learning phase comprises:
during each time interval of the time cycle, and for N time cycles, reading the current location of the target mobile device (212, 214);
computing an average and a standard deviation of the location for each interval within the time cycle;
wherein N is a positive integer.

4. The method of claim 3 wherein the error range for each time interval of the time cycle is a function of the standard deviation for the time interval.

5. The method of any one of claims 1 to 4, wherein the storage module is on the observer device, target mobile device or an application server.

6. The method of any one of claims 3 to 5, wherein the notification to the observer device also notifies the observer device of the extent by which the current location deviates from the average.

7. The method of any one of claims 1 to 6, further including the steps of:
maintaining a list of prohibited geographical areas; and
after the step of reading the current location, if the current location is within a prohibited area of the list of prohibited geographical areas, notifying the observer device.

8. The method of any one of claims 1 to 7, wherein the verifying step comprises:
evaluating each one of a set of rules based on said current location;
if at least one rule of the set of rules is satisfied during the evaluating step, notifying the observer device.

9. The method of any one of claims 1 to 8, further comprising receiving supplementary data based on more parameters than just location data for the target mobile device, wherein the verifying utilizes the supplementary data in determining whether to trigger a notification.

10. The method of claim 9, wherein the verifying utilizes rules related to the supplementary data and the current location to determine whether to trigger the notification.

11. The method of any one of claims 1 to 10, wherein data provided in the notification varies depending on a severity of the deviation.

12. A network element (500) comprising:
a communication subsystem (511);
a processor (538) configured to:
build a location profile, for a target mobile device, by collecting location information (214) at time intervals (212) in a plurality of time cycles (220, 230), wherein
building the location profile comprises comparing location information collected at a time interval (212) within a first time cycle of the plurality of time cycles (220, 230) with other location information, wherein the other location information is taken at the same time interval but within the remaining time cycles of the plurality of time cycles (220, 230), wherein the location profile is created during a learning phase (210, 230) and includes an expected location and an error range for each time interval of a time cycle;
receive the current location of the target mobile device (430);
verify whether the current location deviates from the location profile (440); and
if the current location deviates from the location profile (440), trigger a notification to an observer device (450), the notification including a distance value from the location profile; and;
a storage module configured to maintain the location profile of the target mobile device.

13. The network element of claim 12, wherein the network element is the observer device, the target mobile device or an application server.

## Patentansprüche

1. Verfahren, umfassend:
Bilden eines Standortprofils für eine mobile Zielvorrichtung durch Sammeln von Standortinformationen (214) im gleichen Zeitintervall (212) innerhalb jedes aus einer Vielzahl von Zeitzyklen (220, 230), wobei das Bilden des Standortprofils das Vergleichen der gesammelten Standortinformationen für jedes der Zeitintervalle mit den gesammelten Standortinformationen für andere der Zeitintervalle innerhalb der Vielzahl von Zeitzyklen (220, 230) umfasst und wobei das Standortprofil während einer Lernphase (210, 230) erzeugt wird und einen erwarteten Standort und einen Fehlerbereich für jedes Zeitintervall der gesammelten Standortinformationen beinhaltet;
Aufrechterhalten des Standortprofils der mobilen Zielvorrichtung in einem Speichermodul;
Empfangen des aktuellen Standorts der mobilen Zielvorrichtung (430);
Überprüfen, ob der aktuelle Standort von dem Standortprofil (440) abweicht; und
wenn der aktuelle Standort von dem Standortprofil (440) abweicht, Auslösen einer Benachrichtigung an eine Beobachtervorrichtung (450), wobei die Benachrichtigung einen Entfernungswert von dem Standortprofil beinhaltet.

2. Verfahren nach Anspruch 1, ferner umfassend den Schritt:
Suchen nach dem erwarteten Standort und dem Fehlerbereich für das aktuelle Zeitintervall des Zeitzyklus; und
Ermitteln, ob der aktuelle Standort sich innerhalb eines Bereichs befindet, der durch den erwarteten Standort und den erwarteten Fehlerbereich definiert ist.

3. Verfahren nach Anspruch 2, wobei die Lernphase umfasst:
während jedes Zeitintervalls des Zeitzyklus und für N Zeitzyklen Lesen des aktuellen Standorts der mobilen Zielvorrichtung (212, 214);
Berechnen einer durchschnittlichen und einer Standardabweichung des Standorts für jedes Intervall innerhalb des Zeitzyklus;
wobei N eine positive Ganzzahl ist.

4. Verfahren nach Anspruch 3, wobei der Fehlerbereich für jedes Zeitintervall des Zeitzyklus eine Funktion der Standardabweichung für das Zeitintervall ist.

5. Verfahren nach einem der Ansprüche 1 bis 4, wobei das Speichermodul sich auf der Beobachtervorrichtung, der mobilen Zielvorrichtung oder einem Anwendungsserver befindet.

6. Verfahren nach einem der Ansprüche 3 bis 5, wobei die Benachrichtigung an die Beobachtervorrichtung die Beobachtervorrichtung ebenfalls von dem Umfang benachrichtigt, in dem der aktuelle Standort von dem Durchschnitt abweicht.

7. Verfahren nach einem der Ansprüche 1 bis 6, ferner beinhaltend die Schritte:
Aufrechterhalten einer Liste verbotener geographischer Bereiche; und
nach dem Schritt des Lesens des aktuellen Standorts, wenn der aktuelle Standort sich innerhalb eines verbotenen Bereichs aus der Liste verbotener geographischer Bereiche befindet, Benachrichtigen der Beobachtervorrichtung.

8. Verfahren nach einem der Ansprüche 1 bis 7, wobei der Überprüfungsschritt umfasst:
Bewerten jeder aus einer Gruppe von Regeln basierend auf dem aktuellen Standort;
wenn mindestens eine Regel aus der Gruppe von Regeln während des Bewertungsschritts erfüllt ist, Benachrichtigen der Beobachtervorrichtung.

9. Verfahren nach einem der Ansprüche 1 bis 8, ferner umfassend das Empfangen zusätzlicher Daten basierend auf mehr Parametern als nur den Standortdaten für die mobile Zielvorrichtung, wobei das Überprüfen die zusätzlichen Daten beim Ermitteln verwendet, ob eine Benachrichtigung auszulösen ist.

10. Verfahren nach Anspruch 9, wobei das Überprüfen Regeln in Bezug auf die zusätzlichen Daten und den aktuellen Standort verwendet, um zu ermitteln, ob die Benachrichtigung auszulösen ist.

11. Verfahren nach einem der Ansprüche 1 bis 10, wobei Daten, die in der Benachrichtigung bereitgestellt sind, entsprechend einer Erheblichkeit der Abweichung variieren.

12. Netzwerkelement (500), umfassend:
ein Kommunikationsuntersystem (511);
einen Prozessor (538), der konfiguriert ist, um:
ein Standortprofil für eine mobile Zielvorrichtung durch Sammeln von Standortinformationen (214) in Zeitintervallen (212) in einer Vielzahl von Zeitzyklen (220, 230) zu bilden, wobei das Bilden des Standortprofils das Vergleichen von Standortinformationen, die in einem Zeitintervall (212) innerhalb eines ersten Zeitzyklus aus der Vielzahl von Zeitzyklen (220, 230) gesammelt werden, mit anderen Standortinformationen umfasst, wobei die anderen Standortinformationen im gleichen Zeitintervall gesammelt werden, aber innerhalb der verbleibenden Zeitzyklen aus der Vielzahl von Zeitzyklen (220, 230), wobei das Standortprofil während einer Lernphase (210, 230) erzeugt wird und einen erwarteten Standort und einen Fehlerbereich für jedes Zeitintervall eines Zeitzyklus beinhaltet;
den aktuellen Standort der mobilen Zielvorrichtung (430) zu empfangen;
zu überprüfen, ob der aktuelle Standort von dem Standortprofil (440) abweicht; und
wenn der aktuelle Standort von dem Standortprofil (440) abweicht, eine Benachrichtigung an eine Beobachtervorrichtung (450) auszulösen, wobei die Benachrichtigung einen Entfernungswert von dem Standortprofil beinhaltet; und
ein Speichermodul, das konfiguriert ist, um das Standortprofil der mobilen Zielvorrichtung aufrechtzuerhalten.

13. Netzwerkelement nach Anspruch 12, wobei das Netzwerkelement sich auf der Beobachtervorrichtung, der mobilen Zielvorrichtung oder einem Anwendungsserver befindet.

## Revendications

1. Procédé comprenant :
construire un profil d'emplacement, pour un dispositif mobile cible, par collecte d'informations d'emplacement (214) au même intervalle de temps (212) dans chacun d'une pluralité de cycles temporels (220, 230), la construction du profil d'emplacement comprenant la comparaison des informations d'emplacement collectées pour chacun des intervalles de temps aux informations d'emplacement collectées pour d'autres des intervalles de temps dans la pluralité de cycles temporels (220, 230) et le profil d'emplacement étant créé pendant une phase d'apprentissage (210, 230) et comprenant un emplacement attendu et une plage d'erreur pour chaque intervalle de temps des informations d'emplacement collectées ;
maintenir, dans un module de stockage, le profil d'emplacement du dispositif mobile cible ;
recevoir l'emplacement actuel du dispositif mobile cible (430) ;
vérifier si l'emplacement actuel s'écarte du profil d'emplacement (440) ; et
si l'emplacement actuel s'écarte du profil d'emplacement (440), déclencher une notification vers un dispositif d'observateur (450), la notification comprenant une valeur de distance à partir du profil d'emplacement.

2. Procédé selon la revendication 1, comprenant en outre l'étape consistant à :
rechercher l'emplacement attendu et la plage d'erreur pour l'intervalle de temps actuel du cycle temporel ; et
déterminer si l'emplacement actuel est ou non dans une zone définie par l'emplacement attendu et la plage d'erreur attendue.

3. Procédé selon la revendication 2, dans lequel la phase d'apprentissage comprend :
pendant chaque intervalle de temps du cycle temporel, et pendant N cycles temporels, lire l'emplacement actuel du dispositif mobile cible (212, 214) ;
calculer une moyenne et un écart-type de l'emplacement pour chaque intervalle dans le cycle temporel ;
N étant un entier positif.

4. Procédé selon la revendication 3, dans lequel la plage d'erreur pour chaque intervalle de temps du cycle temporel est une fonction de l'écart-type pour l'intervalle de temps.

5. Procédé selon l'une quelconque des revendications 1 à 4, dans lequel le module de stockage est sur le dispositif d'observateur, le dispositif mobile cible ou un serveur d'application.

6. Procédé selon l'une quelconque des revendications 3 à 5, dans lequel la notification vers dispositif d'observateur notifie également le dispositif d'observateur de la mesure dans laquelle l'emplacement actuel s'écarte de la moyenne.

7. Procédé selon l'une quelconque des revendications 1 à 6, comprenant en outre les étapes consistant à :
maintenir une liste de zones géographiques interdites ; et
après l'étape de lecture de l'emplacement actuel, si l'emplacement actuel est dans une zone interdite de la liste de zones géographiques interdites, notifier le dispositif d'observateur.

8. Procédé selon l'une quelconque des revendications 1 à 7, dans lequel l'étape de vérification comprend :
évaluer chacune d'un ensemble de règles sur la base dudit emplacement actuel ;
si au moins une règle de l'ensemble de règles est satisfaite pendant l'étape d'évaluation, notifier le dispositif d'observateur.

9. Procédé selon l'une quelconque des revendications 1 à 8, comprenant en outre la réception de données supplémentaires sur la base de plus de paramètres que simplement des données d'emplacement pour le dispositif mobile cible, la vérification utilisant les données supplémentaires lors de la détermination s'il faut ou non déclencher une notification.

10. Procédé selon la revendication 9, dans lequel la vérification utilise des règles relatives aux données supplémentaires et l'emplacement actuel pour déterminer s'il faut ou non déclencher la notification.

11. Procédé selon l'une quelconque des revendications 1 à 10, dans lequel des données fournies dans la notification varient en fonction d'une gravité de l'écart.

12. Elément de réseau (500) comprenant :
un sous-système de communication (511) ;
un processeur (538) configuré pour :
construire un profil d'emplacement, pour un dispositif mobile cible, par collecte d'informations d'emplacement (214) à des intervalles de temps (212) dans une pluralité de cycles temporels (220, 230), la construction du profil d'emplacement comprenant la comparaison d'informations d'emplacement collectées à un intervalle de temps (212) dans un premier cycle temporel de la pluralité de cycles temporels (220, 230) à d'autres informations d'emplacement, les autres informations d'emplacement étant prises au même intervalle de temps mais à l'intérieur des cycles temporels restants de la pluralité de cycles temporels (220, 230), le profil d'emplacement étant créé pendant une phase d'apprentissage (210, 230) et comprenant un emplacement attendu et une plage d'erreur pour chaque intervalle de temps d'un cycle temporel ;
recevoir l'emplacement actuel du dispositif mobile cible (430) ;
vérifier si l'emplacement actuel s'écarte ou non du profil d'emplacement (440) ; et
si l'emplacement actuel s'écarte du profil d'emplacement (440), déclencher une notification vers un dispositif d'observateur (450), la notification comprenant une valeur de distance à partir du profil d'emplacement ; et ;
un module de stockage configuré pour maintenir le profil d'emplacement du dispositif mobile cible.

13. Elément de réseau selon la revendication 12, dans lequel l'élément de réseau est le dispositif d'observateur, le dispositif mobile cible ou un serveur d'application.
